(19) Europäisches Patentamt
European Patent Office
Office européen des brevets

(11) **EP 3 070 417 A1**

(12) **EUROPEAN PATENT APPLICATION**
published in accordance with Art. 153(4) EPC

(43) Date of publication:
**21.09.2016 Bulletin 2016/38**

(51) Int Cl.:
**F25B 7/00** (2006.01)     **F25B 1/00** (2006.01)
**F25B 49/02** (2006.01)

(21) Application number: **13897400.1**

(22) Date of filing: **12.11.2013**

(86) International application number:
**PCT/JP2013/080601**

(87) International publication number:
**WO 2015/071967 (21.05.2015 Gazette 2015/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Electric Corporation**
**Tokyo 100-8310 (JP)**

(72) Inventors:
• **SUGIMOTO, Takeshi**
**Tokyo 100-8310 (JP)**

• **ISHIKAWA, Tomotaka**
**Tokyo 100-8310 (JP)**
• **IKEDA, Takashi**
**Tokyo 100-8310 (JP)**

(74) Representative: **Moore, Graeme Patrick**
**Mewburn Ellis LLP**
**City Tower**
**40 Basinghall Street**
**London EC2V 5DE (GB)**

(54) **REFRIGERATION SYSTEM**

(57) A freezing apparatus includes a refrigerant circuit that includes a cascade condenser performing heat exchange between an R32 refrigerant containing R32 and a carbon dioxide refrigerant; and a controller that controls an operation of the refrigerant circuit. The refrigerant circuit includes a first refrigerant circuit in which a first compressor, a first heat exchanger, a first expansion unit, and the cascade condenser are connected by piping and through which the R32 refrigerant flows, the first refrigerant circuit including an air-sending device sending air to the first heat exchanger, and a second refrigerant circuit in which a second compressor, the cascade condenser, a second expansion unit, and a second heat exchanger are connected by piping and through which the carbon dioxide refrigerant flows. The controller includes an air-sending device operation unit for stopping the first compressor and the second compressor and operating the air-sending device in a case where a temperature on an outlet side of the second heat exchanger is lower than or equal to a predetermined temperature.

FIG. 6

**Description**

Technical Field

The present invention relates to a freezing apparatus in which multiple refrigerant circuits are arranged with multiple stages.

Background Art

Conventionally, for example, freezing apparatuses in which a high-temperature-side refrigerant circuit and a low-temperature-side refrigerant circuit are arranged with multiple stages have been suggested. For such freezing apparatuses, for example, in a binary freezing apparatus with a two-stage configuration, heat exchange is performed between condensation heat obtained by condensation of refrigerant at a low-temperature-side refrigerant circuit and evaporation heat obtained by evaporation of refrigerant at a high-temperature-side refrigerant circuit. An evaporator of the low-temperature-side refrigerant circuit at the final stage where a refrigerator or other apparatuses as a cooling target is directly cooled, exchanges heat with the cooling target, thereby cooling the cooling target. Accordingly, in a multi-staged freezing apparatus, such as a binary freezing apparatus, a freezing operation is performed in a cooperative manner. Thus, at the evaporator of the low-temperature-side refrigerant circuit, evaporation heat at a low temperature as low as minus several ten degrees C may be obtained efficiently.

As such a binary freezing apparatus, a freezing apparatus in which R22 (HCFC, hydrochlorofluorocarbon) is used as a refrigerant that flows through a high-temperature-side refrigerant circuit and carbon dioxide ($CO_2$) is used as a refrigerant that flows through a low-temperature-side refrigerant circuit, is disclosed in Patent Literature 1.

Citation List

Patent Literature

Patent Literature 1: Japanese Unexamined Patent Application Publication No. 2004-190917 (Page 6, Figure 1)

Summary of Invention

Technical Problem

However, in the freezing apparatus disclosed in Patent Literature 1, R22 is used as a refrigerant. R22 is fluorocarbon whose ozone depletion potential is not zero. Therefore, the use of R22 is limited. Meanwhile, as a refrigerant different from R22, an HFC refrigerant such as R410A or R404A is used for an air-conditioning apparatus or other apparatuses. However, R410A and R404A have high GWPs (Global Warming Potentials) such as 2088 and 3922, respectively.

In recent years, as refrigerants substitute for R410A and R404A, a slightly flammable refrigerant such as R32 with a small GWP value of 675 has been suggested, and the use of R32 or other refrigerants for an air-conditioning apparatus, a freezing apparatus, or other apparatuses has been considered. In an air-conditioning apparatus, a freezing apparatus, or other apparatuses, refrigerant may be leaked outside through a refrigerant pipe (communication pipe) connected inside a unit or connected to an indoor unit of the air-conditioning apparatus or a unit cooler of the freezing apparatus. However, since extremely large energy is required for ignition of the slightly flammable refrigerant such as R32, ignition does not occur at the normal density of refrigerant gas, and ignition does not occur unless the gas density is considerably high. Accordingly, the possibility that ignition of a slightly flammable refrigerant occurs is extremely low even if the slightly flammable refrigerant is leaked indoors, into a refrigerator, into a freezer, outdoors, or other places.

Furthermore, even when a pinhole is generated at a heat exchanger or other devices such as an evaporator and a slightly flammable refrigerant is leaked through the pinhole, since leakage through the pinhole is slow, the speed of leakage indoors, into a refrigerator, into a freezer, outdoors, or other places is low. Therefore, even if a slightly flammable refrigerant is leaked indoors, into a refrigerator, into a freezer, outdoors, or other places, the density of refrigerant gas does not increase, and ignition does not occur. Furthermore, during operation of the apparatus, even if leakage of a lightly flammable refrigerant occurs, an indoor stream, a stream inside a refrigerator, a stream inside a freezer, an outdoor stream, or a stream at other places is stirred by an air-sending device that sends air to the heat exchanger or other devices. Therefore, the air flow speed is relatively high, and the leaked slightly flammable refrigerant is thus easily diffused. Accordingly, the gas density does not increase, and ignition does not occur.

However, during stoppage of the apparatus, a stream inside the refrigerator, the freezer, and other places is relatively stable. Therefore, if leakage of a slightly flammable refrigerant occurs, the slightly flammable refrigerant does not easily diffuse. Furthermore, since a refrigerant such as R32 containing fluorine has a specific gravity greater than air, the density of such a refrigerant easily increases on a floor face side. Therefore, if a slightly flammable refrigerant such as R32 is accumulated on the floor face, there is a possibility that a powerful ignition source that instantly generates energy larger than expected may exist in the vicinity of the floor face. Therefore, it is desirable to prevent ignition of the slightly flammable refrigerant (with certainty).

The present invention has been made in light of the above problems and provides a freezing apparatus that prevents ignition of a leaked slightly flammable refrigerant.

Solution to Problem

A freezing apparatus according to the present invention includes a refrigerant circuit that includes a cascade condenser performing heat exchange between an R32 refrigerant containing R32 and a carbon dioxide refrigerant; and a controller that controls an operation of the refrigerant circuit. The refrigerant circuit includes a first refrigerant circuit in which a first compressor, a first heat exchanger, a first expansion unit, and the cascade condenser are connected by piping and through which the R32 refrigerant flows, the first refrigerant circuit including an air-sending device sending air to the first heat exchanger, and a second refrigerant circuit in which a second compressor, the cascade condenser, a second expansion unit, and a second heat exchanger are connected by piping and through which the carbon dioxide refrigerant flows. The controller includes air-sending device operation unit for stopping the first compressor and the second compressor and operating the air-sending device in a case where a temperature on an outlet side of the second heat exchanger is lower than or equal to a predetermined temperature.

Advantageous Effects of Invention

According to the present invention, a first refrigerant circuit through which an R32 refrigerant flows is configured as an outdoor unit. Therefore, even if leakage of the R32 refrigerant occurs, the R32 refrigerant is leaked outdoors. Thus, the R32 refrigerant is diffused in accordance with the outdoor stream, and does not increase to a density that causes ignition. Consequently, ignition of the R32 refrigerant may be prevented.

Brief Description of Drawings

[Fig. 1] Fig. 1 is a refrigerant circuit diagram illustrating a freezing apparatus 1 according to Embodiment 1.
[Fig. 2] Fig. 2 is a P-h diagram of the freezing apparatus 1 according to Embodiment 1.
[Fig. 3] Fig. 3 is a graph illustrating a COP of each freezing apparatus in a refrigerating temperature range.
[Fig. 4] Fig. 4 is a graph illustrating a COP of each freezing apparatus in a freezing temperature range.
[Fig. 5] Fig. 5 is a graph illustrating a TEWI of each freezing apparatus in a refrigerating temperature range.
[Fig. 6] Fig. 6 is a refrigerant circuit diagram illustrating a freezing apparatus 1 according to Embodiment 2.

Description of Embodiments

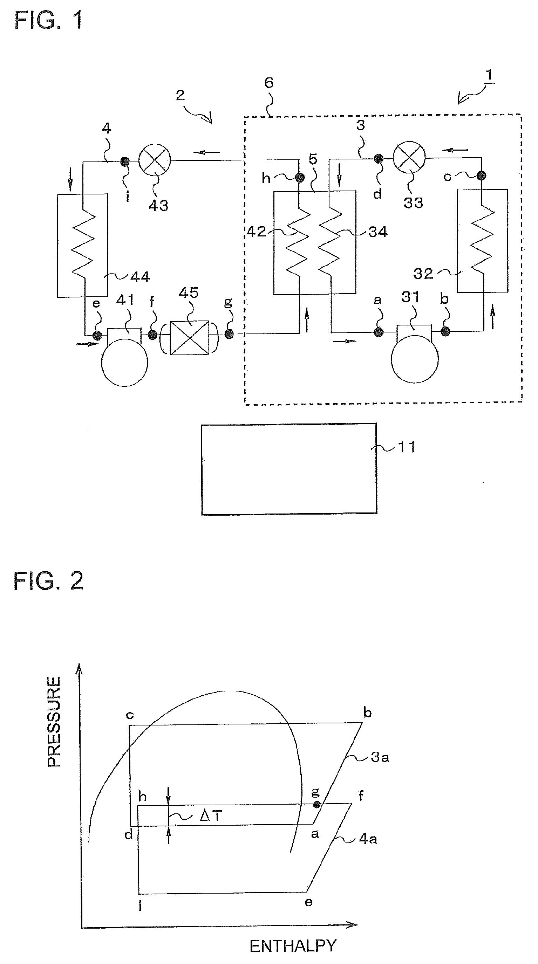

Hereinafter, freezing apparatuses according to the present invention will be explained with reference to the drawings. The present invention is not intended to be limited to the embodiments described below. In the drawings provided below including Fig. 1, the size relationship of individual component members may differ from the actual size relationship.

Embodiment 1.

Fig. 1 is a refrigerant circuit diagram illustrating a freezing apparatus 1 according to Embodiment 1. The freezing apparatus 1 will be explained based on Fig. 1. The freezing apparatus 1 is a binary freezing apparatus in which a refrigerant circuit 2 has a two-stage configuration in which a high-temperature-side first refrigerant circuit (hereinafter, a high-temperature-side refrigerant circuit) 3 and a low-temperature-side second refrigerant circuit (hereinafter, a low-temperature-side refrigerant circuit) 4 are connected by a cascade condenser 5. For the freezing apparatus 1, a controller 11 controls the overall operation of the freezing apparatus 1. The freezing apparatus 1 is not limited to a binary freezing apparatus and may have a multi-stage configuration.

An R32 refrigerant containing R32 flows through the high-temperature-side refrigerant circuit 3. In the high-temperature-side refrigerant circuit 3, a first compressor (hereinafter, a high-temperature-side compressor) 31, a first heat exchanger (hereinafter, a high-temperature-side condenser) 32 operating as a condenser, a first expansion unit (hereinafter, high-temperature-side expansion unit) 33, and a high-temperature-side evaporator 34 in the cascade condenser 5 are connected in series by refrigerant pipes. The high-temperature-side refrigerant circuit 3 is configured as an outdoor unit 6 and is installed outdoors. The R32 refrigerant may be a single refrigerant containing R32 or may be a refrigerant mixture containing 65 weight percent or more of R32. Furthermore, an air-sending device may be installed in the vicinity of the high-temperature-side condenser 32 so that air may be supplied from the air-sending device to the high-temperature-side condenser 32.

In contrast, a carbon dioxide refrigerant (hereinafter, a $CO_2$ refrigerant) flows through the low-temperature-side refrigerant circuit 4. $CO_2$ has a GWP as small as 1 and has little influence on global warming. In the low-temperature-side refrigerant circuit 4, a second compressor (hereinafter, a low-temperature-side compressor) 41, a low-temperature-side intermediate cooler 45, a low-temperature-side condenser 42 in the cascade condenser 5, a second expansion unit (hereinafter, low-temperature-side expansion unit) 43, and a second heat exchanger (hereinafter, a low-temperature-side evaporator) 44 operating as an evaporator are connected in series by refrigerant pipes.

In the low-temperature-side refrigerant circuit 4, the low-temperature-side evaporator 44 exchanges heat between air, brine, or other media supplied from a fan (not illustrated in the figure), a pump (not illustrated in the figure), or other devices arranged in the vicinity of the low-temperature-side evaporator 44 and the $CO_2$ refrigerant, and thus evaporates and gasifies the $CO_2$ refrigerant. Furthermore, in the vicinity of the low-temperature-side evaporator 44, a cooling target (a refrigeration or freezing target), such as a refrigerator, is installed. The low-temperature-side evaporator 44 evaporates the $CO_2$ refrigerant so that the cooling target may be cooled directly or indirectly.

Furthermore, the low-temperature-side intermediate cooler 45 is configured as a gas cooler or a condenser. The low-temperature-side intermediate cooler 45 exchanges heat between air supplied from a fan (not illustrated in the figure) arranged in the vicinity of the low-temperature-side intermediate cooler 45 and the $CO_2$ refrigerant so that the $CO_2$ refrigerant is cooled. As described above, the low-temperature-side intermediate cooler 45 is an auxiliary capacitor that assists the low-temperature-side condenser 42 to condense and liquefy the $CO_2$ refrigerant. The low-temperature-side intermediate cooler 45 does not necessarily condense and liquefy the $CO_2$ refrigerant and only needs to remove heat (sensible heat) from the $CO_2$ refrigerant to reduce the temperature of the $CO_2$ refrigerant to a predetermined temperature. Furthermore, in the case where an air-sending device is installed in the vicinity of the high-temperature-side condenser 32, the air-sending device and a fan may be used in common.

As described above, the cascade condenser 5 allows coupling between the high-temperature-side refrigerant circuit 3 and the low-temperature-side refrigerant circuit 4, and includes the high-temperature-side evaporator 34 and the low-temperature-side condenser 42. The cascade condenser 5 is, for example, a plate heat exchanger, a double-pipe heat exchanger, or other heat exchangers, and exchanges heat between the R32 refrigerant flowing through the high-temperature-side refrigerant circuit 3 and the $CO_2$ refrigerant flowing through the low-temperature-side refrigerant circuit 4. Accordingly, in the freezing apparatus 1 having a two-stage configuration by the cascade condenser 5, heat exchange is performed between the R32 refrigerant and the $CO_2$ refrigerant, and the high-temperature-side refrigerant circuit 3 and the low-temperature-side refrigerant circuit 4, which are independent of each other, may be controlled in cooperation with each other. In the cascade condenser 5, the amount of heat related to heat exchange performed between the R32 refrigerant and the $CO_2$ refrigerant is the same.

Next, an operation of the freezing apparatus 1 according to Embodiment 1 will be described. Fig. 2 is a P-h diagram of the freezing apparatus 1 according to Embodiment 1. As illustrated in Fig. 2, in the freezing apparatus 1, a high-temperature-side refrigeration cycle 3a in the high-temperature-side refrigerant circuit 3 and a low-temperature-side refrigeration cycle 4a in the low-temperature-side refrigerant circuit 4 cross each other.

First, the high-temperature-side refrigeration cycle 3a will be described. The high-temperature-side compressor 31 sucks the R32 refrigerant (a in Fig. 1 and Fig. 2), compresses the R32 refrigerant, and discharges the compressed R32 refrigerant in a high-temperature and high-pressure state (b in Fig. 1 and Fig. 2). The discharged R32 refrigerant flows into the high-temperature-side condenser 32, and the high-temperature-side condenser 32 condenses and liquefies the R32 refrigerant by heat exchange with air supplied from an air-sending device or other devices (c in Fig. 1 and Fig. 2). The condensed and liquefied R32 refrigerant flows into the high-temperature-side expansion unit 33, and the high-temperature-side expansion unit 33 decompresses the condensed and liquefied R32 refrigerant (d in Fig. 1 and Fig. 2). Then, the decompressed R32 refrigerant flows into the high-temperature-side evaporator 34 of the cascade condenser 5, and the high-temperature-side evaporator 34 evaporates and gasifies the R32 refrigerant (a in Fig. 1 and Fig. 2) by heat exchange with the $CO_2$ refrigerant at the low-temperature-side refrigerant circuit 4. Then, the evaporated and gasified R32 refrigerant is sucked into the high-temperature-side compressor 31.

Next, the low-temperature-side refrigeration cycle 4a will be described. The low-temperature-side compressor 41 sucks the $CO_2$ refrigerant (e in Fig. 1 and Fig. 2), compresses the $CO_2$ refrigerant, and discharges the compressed $CO_2$ refrigerant in a high-temperature and high-pressure state (f in Fig. 1 and Fig. 2). The discharged $CO_2$ refrigerant flows into the low-temperature-side intermediate cooler 45, and the low-temperature-side intermediate cooler 45 reduces the temperature of the $CO_2$ refrigerant to a predetermined temperature by, for example, heat exchange or other processing with air supplied from an air-sending device or other devices (g in Fig. 1 and Fig. 2). The $CO_2$ refrigerant cooled by the low-temperature-side intermediate cooler 45 flows into the low-temperature-side condenser 42 of the cascade condenser 5, and the low-temperature-side condenser 42 condenses and liquefies the $CO_2$ refrigerant (h in Fig. 1 and Fig. 2) by heat exchange with the R32 refrigerant at the high-temperature-side refrigerant circuit 3. The condensed and liquefied $CO_2$ refrigerant flows into the low-temperature-side expansion unit 43, and the low-temperature-side expansion unit 43 decompresses the condensed and liquefied $CO_2$ refrigerant (i in Fig. 1 and Fig. 2). The decompressed $CO_2$ refrigerant flows into the low-temperature-side evaporator 44, and the low-temperature-side evaporator 44 evaporates and gasifies the $CO_2$ refrigerant (e in Fig. 1 and Fig. 2) by heat exchange between the cooling target and the $CO_2$ refrigerant. The evaporated and gasified $CO_2$ refrigerant is sucked into the low-temperature-side compressor 41.

As described above, in Embodiment 1, the low-temperature-side intermediate cooler 45 assists the low-temperature-side condenser 42 to condense and liquefy the $CO_2$ refrigerant. In general, at the cascade condenser 5, when the difference $\Delta T$ (see Fig. 2) between the evaporating temperature at the high-temperature-side evaporator 34 and the condensing temperature at the low-temperature-side condenser 42 increases, efficiency, that is, COP (Coefficient Of Performance: performance factor), decreases. In Embodiment 1, the low-temperature-side intermediate cooler 45 is installed on the upstream side of the cascade condenser 5 to cool the $CO_2$ refrigerant so that the temperature of the $CO_2$ refrigerant is reduced to the predetermined temperature, and enthalpy is thus reduced (from f to g in Fig. 2). Therefore, $\Delta T$ is reduced, and COP is improved.

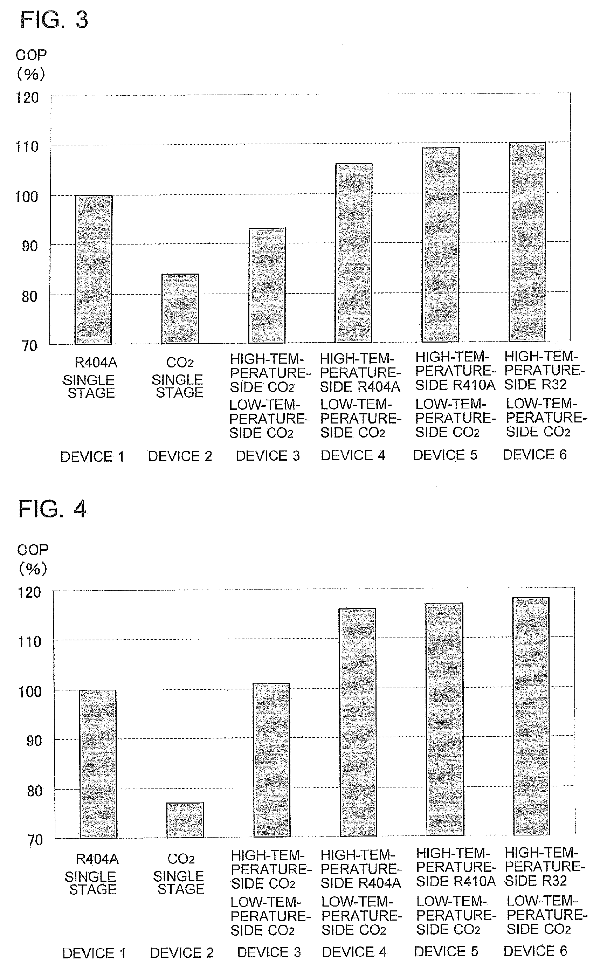

Next, comparison results of COPs of freezing apparatuses in which different refrigerants are used, will be described. First, comparison results in a refrigerating temperature range, for example, in the case where the evaporating temperature at the low-temperature-side evaporator is -10 degrees C, will be described. Fig. 3 is a graph illustrating the COP of each freezing apparatus in the refrigerating temperature range. As freezing apparatuses, uniform freezing apparatuses that do not have a multi-stage configuration by a cascade condenser but have a single-stage configuration in which a compressor, a condenser, expansion unit, and an evaporator are connected by piping to form a single refrigerant circuit, and binary freezing apparatuses are used as comparison targets.

In the uniform freezing apparatuses, as refrigerants to be used, R404A (device 1) that is generally used for current freezing apparatuses for business use and $CO_2$ (device 2) with a small GWP are used. Furthermore, in the binary freezing apparatuses, as combinations of refrigerants to be used, a combination of high-temperature side: $CO_2$ and low-temperature side: $CO_2$ (device 3), a combination of high-temperature side: R404A and low-temperature side: $CO_2$ (device 4), a combination of high-temperature side: R410A and low-temperature side: $CO_2$ (device 5), and a combination of high-temperature side: R32 and low-temperature side $CO_2$ (device 6) are used. As described above, in the binary freezing apparatuses, $CO_2$ with a small GWP is used as a refrigerant in the low-temperature-side refrigerant circuit, which requires a large filling amount of refrigerant. Regarding GWP, $CO_2$ has a value of 1, R404A has a value of 3922, R410A has a value of 2088, and R32 has a value of 675. Furthermore, as conditions for comparison, the outside air temperature is set to 32 degrees C, the evaporating temperature at the low-temperature-side evaporator on a load side (low-temperature side) on which, for example, a showcase or the like is installed is set to -10 degrees C (refrigerating temperature range), and the freezing capacity is set to about 30 kW. An extension pipe at the uniform freezing apparatuses and an extension pipe at the low-temperature-side refrigerant circuit of the binary freezing apparatuses are set to about 100 m.

Assuming that the COP of the device 1 is 100%, the proportion of the other devices, the device 2, the device 3, the device 4, the device 5, and the device 6 is as illustrated in Fig. 3. The COP of the device 2 is 100% or less and is the lowest, and the device 3 has the second lowest COP, as illustrated in Fig. 3. Meanwhile, the COPs of the device 4, the device 5, and the device 6 are 100% or more, and are in the ascending order. As described above, the binary freezing apparatuses in which R32, R410A, and R404A are used as high-temperature-side refrigerants achieve a high COP in the refrigerating temperature range.

Next, comparison results of COPs in a freezing temperature range, for example, in the case where the evaporating temperature at the low-temperature-side evaporator is -40 degrees C, will be described. Fig. 4 is a graph illustrating the COP of each freezing apparatus in the freezing temperature range. Similar to the comparison in the refrigerating temperature range, the device 1, the device 2, the device 3, the device 4, the device 5, and the device 6 are used as comparison targets. As conditions for comparison, the outside air temperature is set to 32 degrees C, the evaporating temperature at the low-temperature-side evaporator on the load side (low-temperature side) on which, for example, a showcase or the like is installed is set to -40 degrees C (freezing temperature range), and the freezing capacity is set to about 10 kW. An extension pipe at the uniform freezing apparatuses and an extension pipe at the low-temperature-side refrigerant circuit of the binary freezing apparatuses are set to about 100 m.

Assuming that the COP of the device 1 is 100%, the proportion of the other devices, the device 2, the device 3, the device 4, the device 5, and the device 6 is as illustrated in Fig. 4. The COP of the device 2 is 100% or less and is the lowest, as illustrated in Fig. 4. Meanwhile, the COPs of the device 3, the device 4, the device 5, and the device 6 are 100% or more, and are in the ascending order. As described above, the binary freezing apparatuses in which R32, R410A, and R404A are used as high-temperature-side refrigerants achieve a high COP in the refrigerating temperature range, which is similar to the comparison results in the refrigerating temperature range.

Here, as a parameter for evaluating the influence on global warming, TEWI (Total Equivalent Warming Impact) is used. The TEWI ($kgCO_2$) may be obtained from equation (1), where the global warming potential is represented by GWP ($kgCO_2$/kg), the filling amount of refrigerant flowing through a refrigerant circuit is represented by m (kg), the annual refrigerant leakage rate is represented by L (%), the number of operation years of the freezing apparatus is represented by n (years), the refrigerant recovery rate at the time of disposal of the freezing apparatus is represented by $\alpha$ (%), the annual power consumption is represented by W (kWh/year), and the $CO_2$ discharge cost of electric power is represented by $\beta$ (0.41 $kgCO_2$/kWh).
[Math. 1]

$$\text{TEWI} = \text{GWP} \times m \times L \times n + \text{GWP} \times m \times (1 - \alpha) + n \times W \times \beta \cdots (1)$$

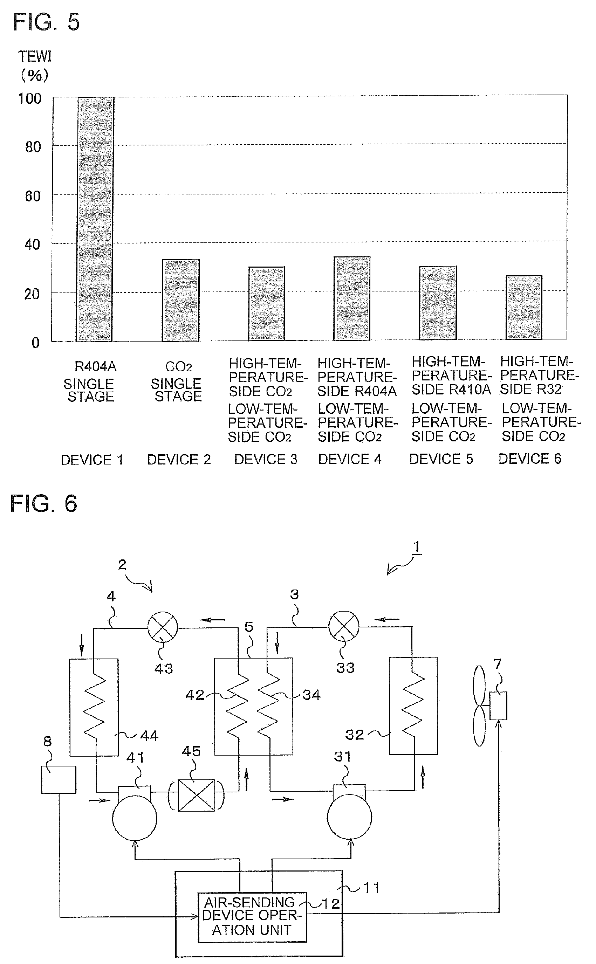

Next, comparison results of TEWIs of freezing apparatuses in which different refrigerants are used in a refrigerating temperature range, for example, in the case where the evaporating temperature at the low-temperature-side evaporator is -10 degrees C, will be described. Fig. 5 is a graph illustrating the TEWI of each freezing apparatus in the refrigerating temperature range. Similar to the comparison of COP, the device 1, the device 2, the device 3, the device 4, the device 5, and the device 6 are defined as comparison targets. As conditions for comparison, the outside air temperature is set to 32 degrees C, the evaporating temperature at the low-temperature-side evaporator on the load side (low-temperature side) on which, for example, a showcase or the like is installed is set to -10 degrees C (refrigerating temperature range), and the freezing capacity is set to about 30 kW. An extension pipe at the uniform freezing apparatuses and an extension pipe at the low-temperature-side refrigerant circuit of the binary freezing apparatuses are set to about 100 m.

Assuming that the TEWI of the device 1 is 100%, the proportion of the other devices, the device 2, the device 3, the device 4, the device 5, and the device 6 is as illustrated in Fig. 5. The TEWIs of the device 2, the device 3, the device 4, the device 5, and the device 6 are lower than that of the device 1 and are substantially equal to each other, as illustrated in Fig. 5. Among the device 2, the device 3, the device 4, the device 5, and the device 6, the TEWI of the device 6 is the lowest. As described above, the freezing apparatus 1 according to Embodiment 1 in which R32 is used as a high-temperature-side refrigerant and $CO_2$ is used as a low-temperature-side refrigerant, achieves the lowest TEWI. Although TEWI in the freezing temperature range, for example, in the case where the evaporating temperature at the low-temperature-side evaporator is -40 degrees C is not illustrated in figures, a substantially equivalent result may be obtained.

As described above, in the freezing apparatus 1 according to Embodiment 1, R32 is used as a high-temperature-side refrigerant and $CO_2$ is used as a low-temperature-side refrigerant. Therefore, the freezing apparatus 1 with a high COP and a low TEWI may be achieved. Furthermore, in the low-temperature-side refrigerant circuit of a uniform freezing apparatus with a single-stage configuration and a binary freezing apparatus, the annual refrigerant leakage rate L is, for example, 16%, when a pipe extension operation, replacement of the low-temperature-side evaporator, or other operations on the spot is taken into consideration. Furthermore, in the high-temperature-side refrigerant circuit of the binary freezing apparatus, the annual refrigerant leakage rate L is, for example, 2% when being a closed circuit and no necessity of pipe operation on the spot are taken into configuration. Furthermore, it is assumed that the number of operation years of the freezing apparatus is set to, for example, 15 years, and the refrigerant recovery rate $\alpha$ at the time of disposal of the freezing apparatus is set to, for example, 30%. It is also assumed that the global warming potential of a high-temperature-side refrigerant flowing through the high-temperature-side refrigerant circuit is represented by GWP(H) ($kgCO_2$/kg), the filling amount of the high-temperature-side refrigerant is represented by m1, and the annual power consumption at the high-temperature-side refrigerant circuit is represented by W1. Furthermore, it is assumed that when $CO_2$ is used as a low-temperature-side refrigerant flowing through the low-temperature-side refrigerant circuit, the global warming potential is represented by 1, the filling amount of the low-temperature-side refrigerant is represented by m2, and the annual power consumption at the low-temperature-side refrigerant circuit is represented by W2. In this case, the TEWI ($kgCO_2$) of the binary freezing apparatus is represented by equation (2), according to equation (1).
[Math. 2]

$$\text{TEWI} = \text{GWP(H)} \times m1 \times 0.02 \times 15 + 1 \times m2 \times 0.16 \times 15$$

$$+ \text{GWP(H)} \times m1 \times (1\text{-}0.3) + 1 \times m2 \times (1\text{-}0.3)$$

$$+ 15 \times W1 \times \beta + 15 \times W2 \times \beta \cdots (2)$$

Equation (2) may be expressed by equation (3).

[Math. 3]

$$TEWI = GWP(H) \times m1 + m2 \times 3.1 + 15 \times \beta \times (W1+W2) \cdots (3)$$

Next, effects of the freezing apparatus 1 according to Embodiment 1 will be described. In Embodiment 1, R32 is used as a high-temperature-side refrigerant and $CO_2$ is used as a low-temperature-side refrigerant. Therefore, as described above, the freezing apparatus 1 has a high COP and a low TEWI. Accordingly, the influence on global environment may be reduced. Similar effects may be achieved in the case where a refrigerant mixture containing 65 weight percent or more of R32 is used as a high-temperature-side refrigerant.

R32 is a slightly flammable refrigerant, and therefore extremely large energy is required for ignition of R32. Thus, ignition does not occur at the normal density of refrigerant gas, and ignition does not occur unless the gas density is considerably high. Furthermore, during operation of the freezing apparatus 1, even if leakage of R32 occurs, a stream at a cooling target, an indoor stream, an outdoor stream, or a stream at other places is stirred by an air-sending device that sends air to the heat exchanger or other devices. Therefore, the air flow speed is relatively high, and a leaked slightly flammable refrigerant is thus easily diffused. Accordingly, the gas density does not increase, and ignition does not occur.

However, during stoppage of the freezing apparatus 1, a stream at a cooling target or other places is relatively stable. Therefore, if leakage of R32 occurs, R32 does not easily diffuse. Furthermore, since a refrigerant such as R32 containing fluorine has a specific gravity greater than air, the density of such a refrigerant easily increases on a floor face side. Therefore, when R32 is accumulated on the floor face, there is a slight possibility that ignition of the slightly flammable refrigerant may occur if a powerful ignition source that instantly generates energy larger than expected exists in the vicinity of the floor face.

However, in Embodiment 1, the high-temperature-side refrigerant circuit 3 through which R32 flows is configured as the outdoor unit 6 and is installed outdoors. Since the outdoor is spacious and an stream exists, even if leakage of R32 occurs, R32 is diffused. Therefore, the density of R32 does not increase, and ignition of R32 does not occur. As described above, in Embodiment 1, even if leakage of R32 occurs, R32 is leaked outdoors. R32 is diffused by an outdoor stream, and is not increased to a density that causes ignition. Accordingly, ignition of R32 may be prevented.

In Embodiment 1, R32 is used as a high-temperature-side refrigerant. In this case, the evaporation latent heat is 270 kJ/kg. This is larger than the evaporation latent heat of R404A: 140 kJ/kg and the evaporation latent heat of R410A: 170 kJ/kg. Thus, the pipe diameter of a liquid pipe and the pipe diameter of a gas pipe at the high-temperature-side refrigerant circuit 3 may be reduced. Furthermore, in the case where the high-temperature-side condenser 32 includes fins and a heat transfer pipe, the pipe dimeter of the heat transfer pipe may be set to be small, such as 4 mm to 8 mm. Accordingly, the filling amount of refrigerant may further be reduced, and therefore the TEWI may further be reduced.

Furthermore, in Embodiment 1, the filling amount of refrigerant may be reduced. Therefore, there is no need to install an accumulator at the high-temperature-side refrigerant circuit 3, and the cascade condenser 5 and the high-temperature-side compressor 31 or the high-temperature-side compressor 31 and the high-temperature-side condenser 32 may be directly connected by piping. Furthermore, since the filling amount of refrigerant may be reduced, there is no need to install a liquid receiver at the high-temperature-side refrigerant circuit 3, and the high-temperature-side condenser 32 and the high-temperature-side expansion unit 33 or the high-temperature-side expansion unit 33 and the cascade condenser 5 may be directly connected by piping.

Embodiment 2.

Next, the freezing apparatus 1 according to Embodiment 2 will be described. Fig. 6 is a refrigerant circuit diagram illustrating the freezing apparatus 1 according to Embodiment 2. Embodiment 2 differs from Embodiment 1 in that an air-sending device 7 is installed in the vicinity of the high-temperature-side condenser 32 and the controller 11 includes air-sending device operation unit 12. In Embodiment 2, the same parts as Embodiment 1 will be referred to with the same signs, and explanation for those same parts will be omitted. Differences from Embodiment 1 will be mainly described.

In Embodiment 2, as illustrated in Fig. 6, the high-temperature-side refrigerant circuit 3 includes the air-sending device 7 that sends air to the high-temperature-side condenser 32. Furthermore, a temperature detector 8 is installed in the vicinity of the low-temperature-side evaporator 44. The temperature detector 8 detects the temperature on the outlet side of the low-temperature-side evaporator 44. The temperature detector 8 is, for example, an inside temperature sensor installed inside a cooling target such as a refrigerator. In the case where the temperature detected by the temperature detector 8 is lower than or equal to a predetermined temperature, each device is stopped by a thermostat installed at the cooing target. Accordingly, subcooling of the cooling target may be suppressed.

The controller 11 includes the air-sending device operation unit 12. In the case where the temperature detected by the temperature detector 8 is lower than or equal to the predetermined temperature, the air-sending device operation unit 12 stops the high-temperature-side compressor 31 and the low-temperature-side compressor 41 and operates the air-sending device 7. Accordingly, even if each device is stopped by the thermostat, the air-sending device 7 is kept operating.

Next, effects of the freezing apparatus 1 according to Embodiment 2 will be described. In the case where the temperature detected by the temperature detector 8 is lower than or equal to the predetermined temperature, the air-sending device operation unit 12 stops the high-temperature-side compressor 31 and the low-temperature-side compressor 41 and operates the air-sending device 7. During stoppage of the freezing apparatus 1, a stream at a cooling target or other places is relatively stable. Therefore, if leakage of R32 occurs, R32 does not easily diffuse. In Embodiment 1, even if each device is stopped by a thermostat, the air-sending device 7 is kept operating. Therefore, even if leakage of R32 occurs, R32 is stirred by the air-sending device 7. Thus, the air flow speed increases, and the leaked R32 is diffused accordingly. Therefore, the gas density does not increase, and ignition does not occur. As described above, in Embodiment 2, even if leakage of R32 occurs, R32 is diffused by the air-sending device 7, and the density of R32 is not increased to a density that causes ignition. Accordingly, ignition of R32 may be prevented.

In the case where the temperature detected by the temperature detector 8 is lower than or equal to the predetermined temperature, the air-sending device operation unit 12 may stop the high-temperature-side compressor 31 and the low-temperature-side compressor 41 and operate the air-sending device 7 in an intermittent manner. Accordingly, the power consumption of the air-sending device 7 may be reduced. Intermittent operation is, for example, repetition of three-minute operation and three-minute stoppage.

Furthermore, apart from stoppage of a device by a thermostat, the freezing apparatus 1 itself may be stopped. Even during such a device operation standby time, the air-sending device operation unit 12 may be configured to operate the air-sending device 7. Accordingly, even if leakage of R32 occurs during a long-term stoppage of the freezing apparatus 1, R32 is diffused by the air-sending device 7, and the density of R32 is not increased to a density that causes ignition. Therefore, ignition of R32 may be prevented.

The freezing apparatus 1 according to Embodiment 1 and the freezing apparatus 1 according to Embodiment 2 may be used in combination thereof. In this case, the high-temperature-side refrigerant circuit 3 is configured as the outdoor unit 6, and the controller 11 includes the air-sending device operation unit 12. Accordingly, the freezing apparatus 1 with a high COP, low GWP and TEWI, and an extremely high safety may be attained.

Reference Signs List

1 freezing apparatus 2 refrigerant circuit 3 first refrigerant circuit (high-temperature-side refrigerant circuit) 3a high-temperature-side refrigeration cycle 4 second refrigerant circuit (low-temperature-side refrigerant circuit) 4a low-temperature-side refrigeration cycle 5 cascade condenser 6 outdoor unit 7 air-sending device 8 temperature detector 11 controller 12 air-sending device operation unit 31 first compressor (high-temperature-side compressor) 32 first heat exchanger (high-temperature-side condenser) 33 a first expansion unit (high-temperature-side expansion unit) 34 high-temperature-side evaporator 41 second compressor (low-temperature-side compressor) 42 low-temperature-side condenser 43 a second expansion unit (low-temperature-side expansion unit) 44 second heat exchanger (low-temperature-side evaporator) 45 low-temperature-side intermediate cooler.

**Claims**

1.  A freezing apparatus comprising:

    a refrigerant circuit including a cascade condenser configured to perform heat exchange between an R32 refrigerant containing R32 and a carbon dioxide refrigerant; and
    a controller configured to control an operation of the refrigerant circuit,

    wherein the refrigerant circuit includes

    a first refrigerant circuit in which a first compressor, a first heat exchanger, a first expansion unit, and the cascade condenser are connected by piping and through which the R32 refrigerant flows, the first refrigerant circuit including an air-sending device configured to send air to the first heat exchanger, and
    a second refrigerant circuit in which a second compressor, the cascade condenser, a second expansion unit, and a second heat exchanger are connected by piping and through which the carbon dioxide refrigerant flows, and

wherein the controller includes

an air-sending device operation unit configured to stop the first compressor and the second compressor and operate the air-sending device in a case where a temperature on an outlet side of the second heat exchanger is lower than or equal to a predetermined temperature.

2. The freezing apparatus of claim 1, wherein the air-sending device operation unit operates the air-sending device in an intermittent manner when the first compressor and the second compressor are stopped.

3. The freezing apparatus of claim 1 or 2, wherein during a device operation standby time, the air-sending device operation unit operates the air-sending device.

4. A freezing apparatus comprising
a refrigerant circuit including a cascade condenser configured to perform heat exchange between an R32 refrigerant containing R32 and a carbon dioxide refrigerant,
wherein the refrigerant circuit includes
a first refrigerant circuit in which a first compressor, a first heat exchanger, a first expansion unit, and the cascade condenser are connected by piping and through which the R32 refrigerant flows, and
a second refrigerant circuit in which a second compressor, the cascade condenser, a second expansion unit, and a second heat exchanger are connected by piping and through which the carbon dioxide refrigerant flows, and
wherein the first refrigerant circuit is configured as an outdoor unit.

5. The freezing apparatus of any one of claims 1 to 4,
wherein the second refrigerant circuit includes
an intermediate cooler provided between the compressor and the cascade condenser, the intermediate cooler being configured to cool the carbon dioxide refrigerant.

6. The freezing apparatus of any one of claims 1 to 5,
wherein the R32 refrigerant is a refrigerant mixture containing 65 weight percent or more of the R32.

7. The freezing apparatus of any one of claims 1 to 6,
wherein the first heat exchanger includes fins and a heat transfer pipe, and wherein the heat transfer pipe has a pipe diameter of 4 mm to 8 mm.

# FIG. 1

# FIG. 2

## FIG. 3

COP
(%)

## FIG. 4

COP
(%)

## FIG. 5

## FIG. 6

## INTERNATIONAL SEARCH REPORT

| International application No. |
| --- |
| PCT/JP2013/080601 |

A.   CLASSIFICATION OF SUBJECT MATTER
*F25B7/00*(2006.01)i,  *F25B1/00*(2006.01)i,  *F25B49/02*(2006.01)i

According to International Patent Classification (IPC) or to both national classification and IPC

B.   FIELDS SEARCHED

Minimum documentation searched (classification system followed by classification symbols)
F25B7/00, F25B1/00, F25B49/02

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | WO 2012/066763 A1  (Mitsubishi Electric Corp.),<br>24 May 2012 (24.05.2012),<br>entire text; all drawings (particularly,<br>paragraphs [0005], [0009], [0013] to [0016];<br>fig. 1 to 2)<br>& US 2013/0180278 A1     & CN 103221760 A | 1-7 |
| Y | JP 2012-107805 A  (Mitsubishi Electric Corp.),<br>07 June 2012 (07.06.2012),<br>entire text; all drawings (particularly,<br>paragraphs [0011] to [0013], [0019]; fig. 1 to<br>6)<br>(Family: none) | 1-7 |

☒   Further documents are listed in the continuation of Box C.          ☐   See patent family annex.

| | |
| --- | --- |
| *      Special categories of cited documents:<br>"A"    document defining the general state of the art which is not considered    to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| 30 January, 2014 (30.01.14) | 10 February, 2014 (10.02.14) |

| Name and mailing address of the ISA/<br>    Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
|---|
| PCT/JP2013/080601 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-69295 A  (Mitsubishi Electric Corp.), 04 March 2004 (04.03.2004), entire text; all drawings (particularly, paragraphs [0066], [0091] to [0092], [0095]; fig. 8) (Family: none) | 1-3,5-7 |
| Y | JP 2009-79818 A  (Panasonic Corp.), 16 April 2009 (16.04.2009), entire text; all drawings (particularly, paragraphs [0034] to [0036]; fig. 1) (Family: none) | 1-3,5-7 |
| Y | JP 2005-207666 A  (Toshiba Corp.), 04 August 2005 (04.08.2005), entire text; all drawings (particularly, claim 11; paragraphs [0033] to [0035], [0042]) (Family: none) | 3 |
| Y | JP 2009-257762 A  (Mitsubishi Electric Corp.), 05 November 2009 (05.11.2009), entire text; all drawings (particularly, paragraphs [0002], [0004], [0015] to [0017]; fig. 1) (Family: none) | 4 |
| Y | JP 11-230626 A  (Matsushita Electric Industrial Co., Ltd.), 27 August 1999 (27.08.1999), entire text; all drawings (particularly, paragraphs [0005] to [0020]) (Family: none) | 6 |
| Y | JP 2000-249413 A  (Daikin Industries, Ltd.), 14 September 2000 (14.09.2000), entire text; all drawings (particularly, claims 1 to 2; paragraphs [0139] to [0156], [0158]; fig. 13 to 14) (Family: none) | 6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004190917 A